(19)

Europäisches Patentamt
European Patent Office
Office européen des brevets

(11) **EP 2 533 194 A1**

(12) **EUROPEAN PATENT APPLICATION**

(43) Date of publication:
**12.12.2012 Bulletin 2012/50**

(51) Int Cl.:
***G06T 3/40*** (2006.01)

(21) Application number: **12170810.1**

(22) Date of filing: **05.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2011 US 201161493693 P**
**29.07.2011 US 201113194850**

(71) Applicant: **Apple Inc.**
**Cupertino, CA 95014 (US)**

(72) Inventors:
• **Millet, Timothy J.**
**Cupertino, CA, 95014 (US)**
• **Tripathi, Brijesh**
**Cupertino, CA, 95014 (US)**
• **Holland, Peter F.**
**Cupertino, CA, 95014 (US)**

(74) Representative: **Lang, Johannes**
**Bardehle Pagenberg Partnerschaft**
**Patentanwälte, Rechtsanwälte**
**Prinzregentenplatz 7**
**81675 München (DE)**

(54) **Inline scaling unit for mirror mode**

(57)    A scaling unit is disclosed that is within a computing device having an internal display and an external interface. The scaling unit facilitates the concurrent presentation of images on the internal display and an external display connected to the external interface. In configurations in which the external interface does not have sufficient data width to concurrently display images on the external display at the same resolution as the internal display, the scaling unit may be used to reduce the number of pixels in a line, thus reducing bandwidth requirements at the external interface. The scaling unit may also scale further to maintain an aspect ratio of the image displayed on the internal display. Further vertical scaling may be performed outside the computing device (e.g., by a dongle coupled between the computing device and the external display), such that the scaling unit may be implemented with reduced memory requirements.

FIG. 2

EP 2 533 194 A1

**Description**

## BACKGROUND

Technical Field

This disclosure relates generally to the use of video displays, and more specifically to the display of a set of images on multiple devices.

Description of the Related Art

In some situations, there is a need to display the same images concurrently on multiple displays of a computer system. For example, consider a system with a computing device having an internal display and an external interface to which an external display is coupled. This system may be used for a presentation-for example, a software demonstration to an audience in a large room. The presenter may view the demonstration on the device's internal display while the audience views the demonstration on the external display. In making such a presentation, it is typically desirable for the two displays to show the same images at the same time (or at least such that differences between the two displays are not visually apparent). Achieving such a result, however, may require significant resources of the computing device. Such an allocation of resources may not make sense from a design standpoint, particularly where real estate is at a premium on the computing device (e.g., the computing device is a tablet or smart phone device) and the presentation feature described above is not frequently used. Further complicating the situation is the multiplicity of possible external displays of differing resolutions that may be attached to the computing device.

## SUMMARY

This disclosure relates to a computing device with a scaling unit that facilitates a mode in which images are displayed concurrently on different displays, such as an internal display of the computing device and an external display coupled to the computing device via an external interface. In one embodiment, the external interface may not have sufficient bandwidth (e.g., pins) to support concurrent display of images at the same resolution being used for the internal display. Accordingly, a scaling unit may be implemented within the computing device that receives pixel values destined for the internal display and down-scales these pixel values in the horizontal direction (i.e., within a line of pixels) and provides the down-scaled pixels to the external interface. By the scaling unit operating on pixel values produced by a display pipeline for the internal display, the need for the operation of an entirely separate display pipeline for the external display is eliminated. With horizontal scaling performed on the computing device, vertical scaling may then be performed outside the computing device-for example, in a dongle or other device coupled between the computing device and the external display. Scaling horizontally but not vertically on the computing device reduces on-board memory requirements since multiple pixel lines for the external display need not be stored within the scaling unit.

In one embodiment, the down-scaling produced by the scaling unit reduces pixel bandwidth through the external interface to support concurrent display of the images. In some embodiments, the scaling unit may down-scale further to maintain the aspect ratio of the image as displayed on the primary display. In some implementations, the aspect ratio of the image may depend upon the orientation of the computing device, and the scaling unit may adjust a scaling factor accordingly. For example, in one embodiment, a computing device may have a resolution of 2048 columns by 1536 rows when the computing device is oriented in a "landscape" mode, and have a resolution of 2048 rows by 1536 columns when oriented in a "portrait" mode. The former orientation has an aspect ratio of 4:3; the latter has an aspect ratio of 3:4.

As noted above, when displaying images concurrently on two different displays, it may be desirable that the images be displayed concurrently. Because pixels are being down-scaled by the scaling unit for inclusion in an output video frame, however, these pixels are not available at the same time as in the original video frame. Similarly, the frame control signals (e.g., vertical sync, horizontal sync) for the original frame often cannot be used "as is" for the output frame without the introduction of visual artifacts.

To this end, in one embodiment, the scaling unit is configured to write down-scaled pixel values to a buffer circuit in an input clock domain (e.g., a clock domain of the internal display) and read from the buffer circuit in an output clock domain (e.g., a clock domain of the external display) during appropriate periods in the output video frame. The scaling unit may be further configured to generate control signals for the output video frames, thus creating retimed video frames that include the down-scaled pixels.

In one embodiment, the computing device, upon detecting a connection to an external display, selects a set of timing parameters from a data store that includes timing parameters for supported external displays. The selected timing parameters may then be used to program the scaling unit to generate horizontal and vertical sync signals for the retimed video frame. For example, one of the selected timing parameters may specify an initial delay needed for the scaling unit to generate a first output pixel from a group of pixels in the original video frame. This and other parameters may be used to control one or more state machines in the scaling unit that are used to generate control signals for the retimed video frame.

In various embodiments, the scaling unit may generate control signals such that a refresh rate for retimed frames being displayed on a secondary display is the same as a refresh rate for frames being displayed on a primary display. This may performed in one embodiment by ensuring that various other timing requirements are met, such as ensuring that a line time for the primary display is the same as a line time for the external display. Meeting these timing requirements may prevent image drift, thus facilitating a visually satisfying concurrent presentation on multiple displays.

## BRIEF DESCRIPTION OF THE DRAWINGS

Fig. 1 is a block diagram of one embodiment of a computer system having multiple displays.

Fig. 2 is a block diagram of one embodiment of a computer system that includes a computing device with an internal horizontal scaling unit.

Figs. 3A and 3B illustrate examples of down-scaling for a secondary display while maintaining an aspect ratio of an image on a primary display.

Fig. 4 is a block diagram of one embodiment of a scaling unit.

Fig. 5 is a block diagram of another embodiment of a scaling unit.

Fig. 6 is a table illustrating operation of one embodiment of a horizontal scaler.

Fig. 7 is a diagram illustrating exemplary retiming of an input line of pixels.

Figs. 8A and 8B are exemplary diagrams illustrating timing of vertical sync and horizontal sync signals, respectively.

Figs. 9A and 9B are flow diagrams illustrating embodiments of state machines for output vertical sync and output horizontal sync generation, respectively.

Fig. 10A depicts a set of equations relating to scaling latencies for one embodiment of a horizontal scaling unit.

Fig. 10B depicts an equation that governs line retiming restrictions according to one embodiment of a horizontal scaling unit.

Fig. 10C depicts a set of equations governing pixel retiming restrictions according to one embodiment of a horizontal scaling unit.

Fig. 10D depicts an equation governing frame offset restrictions according to one embodiment of a horizontal scaling unit.

Fig. 11A is a flowchart depicting one embodiment of a method for generating an output frame from an input frame.

Fig. 11B is a flowchart depicting one embodiment of a method for operating a computer system to concurrently display images.

Fig. 11C is a flowchart depicting one embodiment of a method for programming a horizontal scaling unit.

Fig. 12 is a table depicting exemplary input and output timing parameters for a pair of displays.

This specification includes references to "one embodiment," "an embodiment," "one implementation," or "an implementation." The appearances of these phrases do not necessarily refer to the same embodiment or implementation. Particular features, structures, or characteristics may be combined in any suitable manner consistent with this disclosure.

Further, various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware-for example, circuits, memory storing program instructions executable to implement the operation, etc. Reciting that a unit/circuit/component is "configured to" perform one or more tasks is expressly intended <u>not</u> to invoke 35 U.S.C. § 112, sixth paragraph, for that unit/circuit/component.

## DETAILED DESCRIPTION

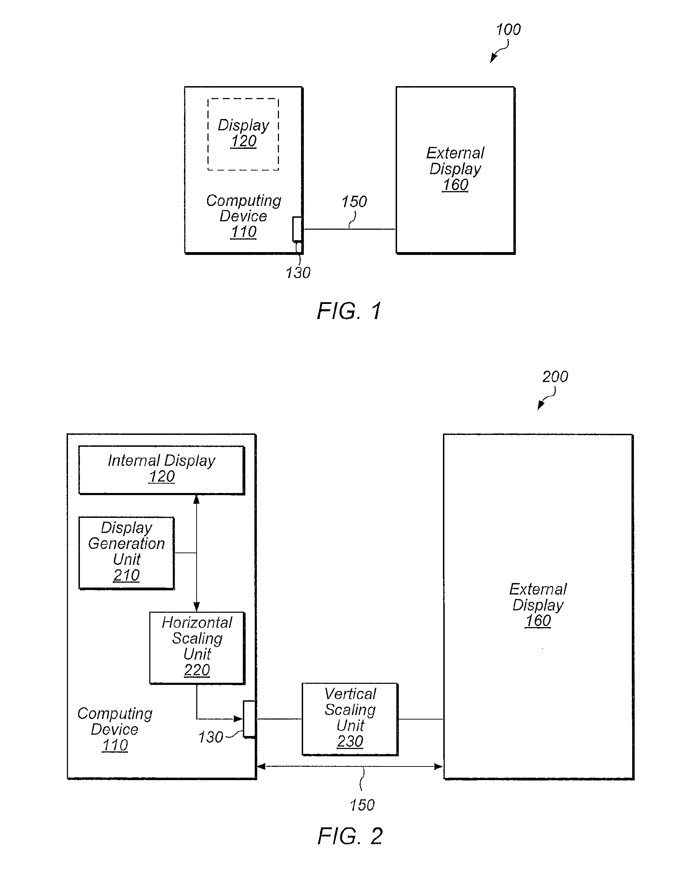

Turning now to Fig. 1, a block diagram of a computer system with multiple displays is shown. Computer system 100 includes computing device 110, which may be any suitable type of computing device. In one embodiment, device 110 is a tablet computing device such as an IPAD product.

As shown, device 110 is coupled to display 120. In one embodiment, display 120 is integrated or internal to computing device 110. This display may be referred to as the "primary" display of device 110. In some embodiments, primary display 120 may be connected to device 110 through an external interface. Display 120 is represented with a dotted line in Fig. 1 to indicate that it may be located either internal or external to device 110. As used herein, a display refers to any device that is configured to present a visual image in response to control signals to the display. A variety of technologies may be used in the display, such as cathode ray tube (CRT), thin film transistor (TFT), liquid crystal display (LCD), light emitting diode (LED), plasma, etc. A display may also include touch screen input functionality, in some embodiments. The display devices may also be referred to as panels, in some cases.

In addition to display 120, computing device 110 includes an external interface 130 that is coupled to an external or secondary display 160 via connection 150. Interface 130 may be any type of standard or proprietary interface, and may be wired or wireless. A given interface 130 can be understood to have a "data width" (e.g., a number of pins) that dictates how much data the interface can transfer at a given point in time. Connection 150 is a logical representation of the connection between device 110 and secondary display 160. In various embodiments, connection 150 may be wireless. In other embodiments, connection 150 may be wired, and may include one or more intervening hardware components, such as a vertical scaling unit discussed below. Like primary display 120, secondary display 160 may be any suitable type of device. In one embodiment, secondary display 160 is a high-definition TV (HDTV) compatible device.

Computing device 110 may include various structures (not depicted in Fig. 1) that are common to many computing devices. These structures include one or more processors, memories, graphics circuitry, I/O devices, bus controllers, etc.

Processors within device 110 may implement any instruction set architecture, and may be configured to execute instructions defined in that instruction set architecture. The processors may employ any microarchitecture, including scalar, superscalar, pipelined, superpipelined, out of order, in order, speculative, non-speculative, etc., or combinations thereof. The processors may include circuitry, and optionally may implement microcoding techniques. The processors may include one or more L1 caches, as well one or more additional levels of cache between the processors and one or more memory controllers. Other embodiments may include multiple levels of caches in the processors, and still other embodiments may not include any caches between the processors and the memory controllers.

Memory controllers within device 110 may comprise any circuitry configured to interface to the various memory requestors (e.g. processors, graphics circuitry, etc.). Any sort of interconnect may be supported for such memory controllers. For example, a shared bus (or buses) may be used, or point-to-point interconnects may be used. Hierarchical connection of local interconnects to a global interconnect to the memory controller may be used. In one implementation, a memory controller may be multi-ported, with processors having a dedicated port, graphics circuitry having another dedicated port, etc.

Memory within device 110 may be any type of memory, such as dynamic random access memory (DRAM), synchronous DRAM (SDRAM), double data rate (DDR, DDR2, DDR3, etc.) SDRAM (including mobile versions of the SDRAMs such as mDDR3, etc., and/or low power versions of the SDRAMs such as LPDDR2, etc.), RAMBUS DRAM (RDRAM), static RAM (SRAM), etc. One or more memory devices may be coupled onto a circuit board to form memory modules such as single inline memory modules (SIMMs), dual inline memory modules (DIMMs), etc. Alternatively, the devices may be mounted with a system on a chip in a chip-on-chip configuration, a package-on-package configuration, or a multi-chip module configuration.

Graphics controllers within device 110 may be configured to render objects to be displayed into a frame buffer in the memory. The graphics controller may include one or more graphics processors that may execute graphics software to perform a part or all of the graphics operation, and/or hardware acceleration of certain graphics operations. The amount of hardware acceleration and software implementation may vary from embodiment to embodiment.

In various embodiments, different structures within computing device 110 may be located within a system on a chip (SoC). In one implementation, device 110 includes integrated display 120, an SoC, memory, and interface 130, with the SoC coupled to the display, the memory, and the interface. Other embodiments may employ any amount of integrated and/or discrete implementations.

Computing device 110 may operate to display frames of data. Generally, a frame is data describing an image to be displayed. A frame may include pixel data describing the pixels included in the frame (e.g. in terms of various color spaces, such as RGB or YCrCb), and may also include metadata such as an alpha value for blending. Static frames may be frames that are not part of a video sequence. Alternatively, video frames may be frames in a video sequence. Each frame in the video sequence may be displayed after the preceding frame, at a rate specified for the video sequence (e.g. 15-30 frames a second). Video frames may also be complete images, or may be compressed images that refer to other images in the sequence. If the frames are compressed, a video pipeline in device 110 may decompress the frames.

A display generation unit within device 110 may be configured to read frame data from memory and to process the frame data to provide a stream of pixel values for display. The display generation unit may provide a variety of operations on the frame data (e.g. scaling, video processing for frames that are part of a video sequence, etc.). The unit may be configured as a display pipeline in some embodiments. Additionally, the display generation unit may be configured to blend multiple frames to produce an output frame. For example, in one embodiment, each frame pixel may have an associated alpha value indicating its opaqueness. The display generation unit may include one or more user interface blocks configured to fetch and process static frames (that is, frames that are not part of a video sequence) and one or more video pipelines configured to fetch and process frames that are part of a video sequence. The frames output by the user interface blocks may be blended with a video frame output by the video pipeline. In one embodiment, the display generation unit may be configured to provide the output pixel stream to pixel processing units (PPUs) within device 110.

Generally, a pixel value in a stream of pixel values may be a representation of a pixel to be displayed on a display coupled to device 110. The pixel value may include a one or more color space values. For example, in an RGB color space, the pixel value includes a red value, a green value, and a blue value. Each value may range from zero to $2^N-1$, and describes an intensity of the color for that pixel. Similarly, in the YCrCb color space, the pixel value includes a Y value, a Cr value, and a Cb value. The location of a pixel on the display may be inferred from the position of the corresponding pixel value in the pixel stream. For example, the pixel stream may be a series of rows of pixels, each row forming a line on the display screen. In a progressive-mode display, the lines are drawn in consecutive order and thus the next line in the pixel stream is immediately adjacent to the previous line. In an interlaced-mode display, consecutive passes over the display draw either the even or the odd lines, and thus the next line in the pixel stream skips one line from the previous line in the pixel stream. For brevity, the stream of pixel values may be referred to as a pixel stream, or a stream of pixels. Pixel processing units within device 110 may be configured to perform various pixel operations on the pixel stream and may provide the processed pixel stream to the respective physical interfaces (PHYs). Generally, a pixel operation may be any operation that may be performed on a stream of pixels forming a line on a display. For example, pixel operations may include one or more of: color space conversions, backlight control, gamma correction, contrast ratio improvement, filtering, dithering, etc. The PHYs may generally include the circuitry that physically controls the corresponding displays. The PHYs may drive control signals that physically control the respective display panels in response to the pixel values. Thus, for example, a PHY for a display that is controlled by RGB signals may transmit voltages on the R, G, and B signals that correspond to the R, G, and B components of the pixel. There may also be a display clock that may be transmitted by the PHYs, or the display clock may be embedded in one of the control signals. Different PHYs for different displays may have clocks that are within different clock domains.

A "clock domain" refers to the circuitry that is controlled responsive to a given clock. Clocked storage devices such as latches, registers, flops, etc. may all be configured to launch and capture values responsive to the given clock, either directly or indirectly. That is, the clock received by a given clocked storage device may be the given clock or a clock that is derived from the given clock. On the other hand, clocked storage devices in a different clock domain launch/ capture values responsive to a different clock that may not have a synchronous relationship to the given clock.

It is often desirable to use computing device 110 to make a presentation-for example, to an audience in a large room. In such a situation, the size of primary display 120 may be inadequate for audience members. To facilitate such presentations, secondary display 160 may be coupled to device 110 via interface 130 and connection 150. In this manner, the presenter may view the presentation on display 120 while the audience views the presentation on display 160.

Such dual display becomes less useful, however, if images on the displays are not synchronized (that is, someone viewing the two images can visually discern image drift or other visual discrepancies). Stated another way, it is often desirable that the two images be displayed concurrently, such that when the presenter is describing a feature of the presentation appearing on display 120, this same feature is also appearing on display 160 at the same time. (As will be described further below, there may be some inherent phase difference between images on different display. As used herein, however, references to "synchronized," "synchronous," or "concurrent" display of images includes display of images on different displays that do not have visually discernable image drift.)

Concurrent display of images becomes more difficult when the internal display and external display have different resolutions (i.e., different number of pixels in the horizontal and vertical directions). One possible solution is to have different display generation units for each display. Such an approach has significant drawbacks. Consider a game developer who wishes to demonstrate a new video game using internal and external displays. If the video game is pushing the processing power of device 110, it may be a waste of processing power to have a second display generation unit running for the external display, when in effect it would be rendering the same image as for the first display generation unit. Thus, such a configuration might not allow the developer the ability to showcase the video game running at peak performance.

An alternative solution is the use of a "mirror mode" in which a single display generation unit is used to provide output (e.g., pixels) to displays 120 and 160. This solution involves fetching data from memory only a single time (as opposed to twice in the solution described above). In some embodiments of computing device 110, however, the use of mirror mode may still have shortcomings. In particular, in some instances, the data width of interface 130 may not provide sufficient bandwidth to concurrently display images on both displays. For example, interface 130 may be sufficient for many data transfer applications, but may not have enough pins to display video on an HDTV secondary display concurrently with the primary display. In order to facilitate concurrent display of images through such a connector, the data sent to interface 130 may be compressed. A horizontal scaling unit for performing such compression is described next with respect to Fig. 2.

Turning now to Fig. 2, a block diagram of one embodiment of a computer system 200 is depicted. Where applicable, components of system 200 have the same reference numerals as in Fig. 1. As shown, system 200 includes computing device 110, which is coupled to external display 160 via interface 130 and connection 150.

As described above with reference to Fig. 1, computing device 110 may be configured to operate in a mirror mode in which a single display generation unit provides output to displays 120 and 160. As used herein, the term "display generation unit" refers to any circuitry that may be used to generate graphics or pixel data for display, and may refer to pipelined circuitry that performs a series of graphical or pixel operations. Fig. 2 depicts a display generation unit 210 that provides output to display 120. While Fig. 2 shows the coupling between unit 210 and display 120 as a direct connection, in various embodiments, different circuitry or units (e.g., a PHY unit) may reside along this path. Fig. 2 also depicts the output of display generation unit 210 being provided to external display 160 via a path that includes horizontal scaling unit 220, interface 130, and vertical scaling unit 230. As with the connection between unit 210 and display 120, the connection between unit 210 and display 160 may have various units or circuitry in addition to those shown in Fig. 2. In one embodiment, display generation unit 210 includes separate pipelines for displays 120 and 160, with each of these pipelines divided into a front end and a back end. The front ends may deal with operations such as scaling, color space conversion, and blending, while the back ends may involve preparation of post-scaled and blended pixels for display on a panel (e.g., via dithering, etc.). In one embodiment, the use of hardware mirror mode includes the back end of the display pipeline for the secondary display selecting as input the output of the front end of the display pipeline for the primary display. In other words, in one embodiment of display generation unit 210, the back end of the secondary display pipeline includes a multiplexer that, during operation in mirror mode, selects between the front-end outputs of the first and secondary display pipelines for further processing.

As described above, in some embodiments, the data width of interface 130 is less than that of an interface to primary display 120. In these situations, in order to effectuate display of images on secondary display 160 concurrently with display of images on primary display 120, interface 130 can be redesigned or the data passing through interface 130 may be compressed. Redesign of interface 130 may be problematic, particularly in situations in which the connector has been widely adopted over time.

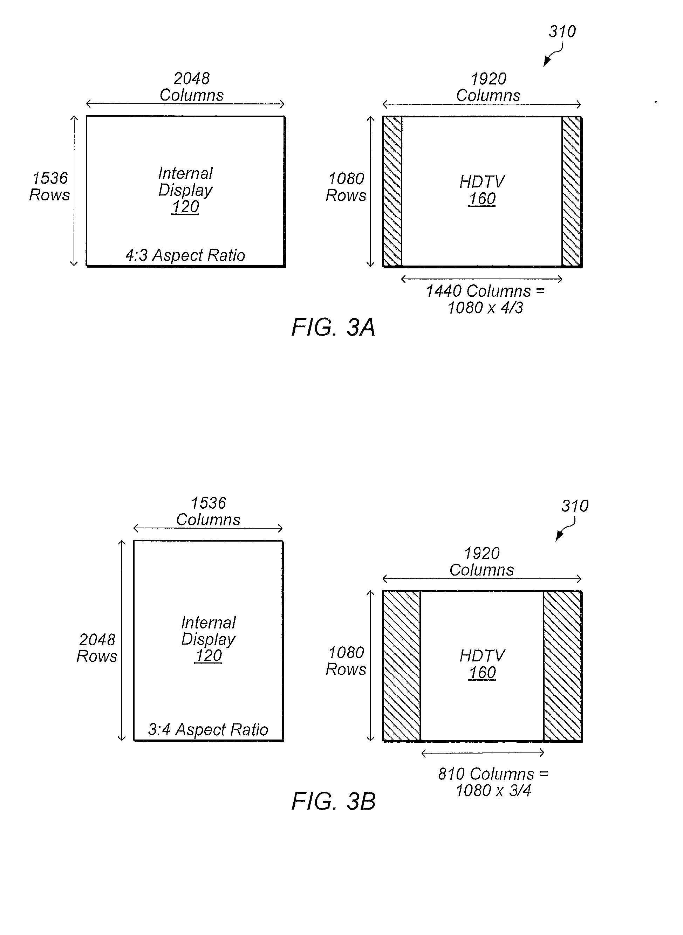

In one embodiment, computing device 110 achieves concurrent display on external display 160 through bandwidth-limited interface 130 by scaling the data in between display generation unit 210 and interface 130. In the embodiment shown, horizontal scaling unit 220 is configured to reduce the number of pixels (i.e., down-scale) in a line of pixels provided by display generation unit 210. As one example, horizontal scaling unit 220 may receive 2048 pixels for a given line of a frame to be displayed on display 120, and down-scale these input pixels to output 1440 pixels for a frame to be displayed on display 160. (Further scaling examples are given with respect to Figs. 3A and 3B.)

The term "horizontal" scaling denotes processing within a given line of pixels of a frame (e.g., columns 1-2048 of row 1 of a frame), in contrast to processing such as vertical scaling in which pixels from multiple rows are involved. Because unit 220 performs horizontal but not vertical scaling in one embodiment, this reduces the memory needed within unit 220 to store pixels. That is, if unit 220 performed vertical scaling in lieu of or in addition to horizontal scaling, unit 220 would likely need to store multiple lines of pixels at a given time in order to facilitate the vertical scaling process. Instead, unit 220, in one embodiment, operates only on pixels within a given row of the input frame, and thus is an "inline" scaler.

The implementation of Fig. 2 provides horizontally scaled data to interface 130. In one embodiment, horizontal scaling unit 220 applies a sufficient scale factor to the data such that the data width of interface 130 can accommodate concurrent display of images on both displays. As will be described with reference to Figs. 3A and 3B, in some embodiments, unit 220 may apply an additional scale factor that maintains the aspect ratio of the image on primary display 120 when displaying the image on secondary display 160. The scale factor may also be based on additional factors, such as a current orientation of computing device 110 (i.e., whether device 110 is in a portrait or landscape mode). (Note, as used herein, the term "based on" is used to describe one or more factors that affect a determination. This term does not foreclose additional factors that may affect a determination. That is, a determination may be based solely on those factors or based at least in part on those factors. Consider the phrase "determine A based on B." While B may be a factor that affects the determination of A, such a phrase does not foreclose the determination of A from also being based on C. In other instances, A may be determined based solely on B.)

Note that in some embodiments, device 110 may perform horizontal and vertical scaling between unit 210 and interface 130. In some designs, however, this additional complexity within device 110 is not warranted when considering the typical frequency of the use of mirror mode as compared to the additional hardware resources that would need to be allocated to perform the vertical scaling within device 110. Accordingly, in the embodiment shown in Fig. 2, unit 220 performs scaling that is sufficient to meet the bandwidth limitations of interface 130, operating in the horizontal dimension but not the vertical dimension.

Vertical scaling is thus performed outside of device 110. In the embodiment shown, vertical scaling unit 230 is a hardware device located within connection 150. In one embodiment, unit 230 is a dongle that couples to interface 130 and provides a connection (either wired or wireless) to external display 160. Alternate embodiments are possible. For example, unit 230 could be situated at the other end of connection 150, or even within external display 160. The configuration shown in Fig. 2 thus allows the mirror mode of device 110 to operate through a bandwidth-limited interface by performing horizontal scaling of input pixels and leaving vertical scaling to be handled off-device.

Turning now to Fig. 3A, a specific, non-limiting example 310 of scaling that may be performed by system 200 is depicted. The dimensions (resolution) of internal display 120 are shown on the left (2048 columns by 1536 rows); the dimensions of external display 160 are shown on the right (1920 columns by 1080 rows). Note that primary display 120 has an aspect ratio (ratio of width to height) of 4:3; external display 160 has an aspect ratio of 16:9. Embodiments of the present disclosure may be applied to any suitable combination of primary and secondary display resolutions. In the example shown, display 120 may be the integrated display of a tablet computing device such as an IPAD product, while external display 160 may be a HDTV display, such as those commonly used for presentations.

As discussed above, a problem may exist when a data width of interface 130 does not permit concurrent display of images on displays 120 and 160 (even leaving aside the differences in resolution). Horizontal scaling unit 220 may thus operate to scale in the horizontal dimension by an amount sufficient to pass data through interface 130 at a rate that supports concurrent display of images. In certain embodiments, unit 220 may apply an additional scale factor to preserve an aspect ratio of the image on display 120. The application of such a scale factor thus allows proportionately sized concurrent images to appear on displays 120 and 160.

In the example shown, an image displayed on display 120 at 2048x1536 pixels is ultimately down-scaled to fit on a 192ox1080 display. In one embodiment, the scaling factor applied by unit 220 is based on whichever dimension (horizontal or vertical) needs the greatest amount of down-scaling. In Fig. 3A, more down-scaling is needed in the vertical direction (1536 rows -> 1080 rows) than in the horizontal direction (2048 columns → 1920 columns). Accordingly, the number of output columns may be computed by multiplying the number of output rows by the aspect ratio of the original image (4:3). As shown in Fig. 3A, the number of output columns is 1080 x (4/3) = 1440. Unit 220 thus applies a sufficient horizontal scaling factor to down-scale 2048 columns to 1440 columns. Vertical scaling unit subsequently applies a sufficient vertical scaling factor to down-scale 1536 rows to 1080 rows. The resultant 1440x1080 image preserves the original aspect ratio of 4:3. As shown, certain columns on the left and the right of the display may be unused (e.g., blacked out) and only the middle 1440 columns used. The scaling factor applied in the horizontal dimension in this example is thus based on one of the resolutions of display 160 (in this case, the vertical dimension), as well as an aspect ratio of display 120.

For certain implementations of computing device 110, the aspect ratio of display 120 may change. In one embodiment, the aspect ratio of display 120 may change based on the orientation of device 110. For example, device 110 may be configured such that if it is oriented (e.g., by the user) in a "landscape" mode (as in Fig. 3A), the aspect ratio is 4:3, but if it is oriented in a "portrait" mode (as in Fig. 3B), the aspect ratio changes to 3:4. Accordingly, unit 220 may be configured such that for identical hardware setups (e.g., the same combination of displays 120 and 160), the current horizontal scale factor applied by unit 220 may change based on a current orientation of device 110. The current orientation information may be communicated to unit 220 in various ways. In one embodiment, unit 220 may be configured to read from a register that indicates the current orientation.

Fig. 3B depicts example 320, in which display 120 is in a portrait orientation, such that the resolution is now 1536 rows by 2048 columns. Once again, the bigger down-scaling to display 160 is in the vertical dimension (2048 rows → 1080 rows); indeed, in this example, there are more columns on display 160 (1920) than on display 120 (1536). Accordingly, the number of output columns is 1080 x (3/4) = 810. As in example 310, display 160 may use only the middle 810 pixels of display 160 in one embodiment, blacking out an appropriate number of pixels on the left and right of the displayed image. In example 320, horizontal scaling unit 220 thus applies a scaling factor to down-scale from 1536 columns to 810 columns. This scaling factor is based on one of the dimensions of display 160 (here, the vertical dimension), as well as the current orientation of display 120.

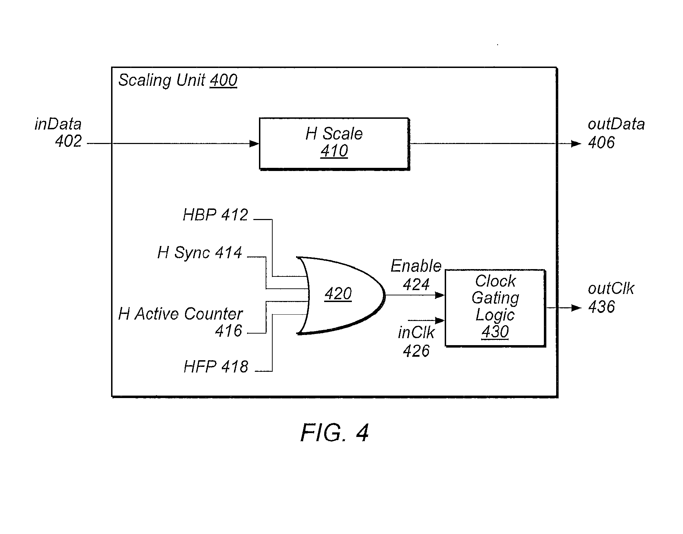

Turning now to Fig. 4, a block diagram of one embodiment of a scaling unit 400 is depicted. As has been described above, horizontal scaling unit 220 is configured to down-scale pixels produced by display generation unit 210 to reduce the number of pixels that travel through interface 130, permitting concurrent display of images on displays 120 and 160. This process is represented in Fig. 4 by H Scale unit 410, which receives input pixels (inData 402) and down-scales to produce output pixels (outData 406).

To produce a synchronized image, however, timing issues need be considered. For example, if the clock used by internal display 120 (inClk in Fig. 4) were also used without modification for external display 160 (outClk), there would be output clock pulses for which there would be no corresponding pixel to send to display 160. Accordingly, there would be "gaps" on display 160.

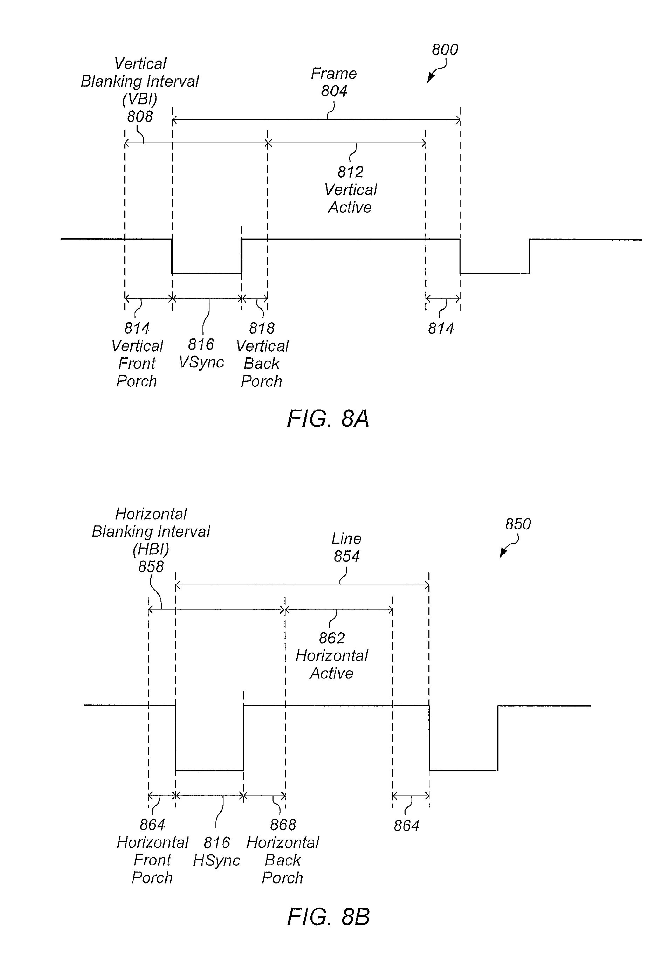

The generation of vertical and horizontal control signals for display 160 need also be considered. Examples of such signals are shown with reference to Figs. 8A (vertical control signals) and 8B (horizontal control signals). Fig. 8A also depicts the concept of a vertical blanking interval (VBI) (reference numeral 808), which is the period of time between the end of the last line of active pixel data of one frame and the beginning of the first line of pixel data of the subsequent frame. This blanking interval is composed of three periods: vertical sync 816, vertical back porch 818, and vertical front porch 814.

Vertical sync period 816 starts at the beginning of a frame. The vertical back porch period 818 starts at the end of vertical sync period 816 and lasts until the beginning of the first line of active pixel data (i.e., the beginning of vertical active period 812). The vertical front porch period 814 starts at the end of the last active line of pixel data and lasts until the beginning of the next frame (i.e. the beginning of the next vertical sync). Each of these periods may be defined as an integer multiple of the horizontal line time (reference numeral 854 in Fig. 8B).

Similarly, the horizontal blanking interval (HBI) 858 is the period between the last active pixel of one horizontal line and the first active pixel of the subsequent line, and is composed of a horizontal sync period 816, a horizontal back porch (HBP) period 868, and a horizontal front porch (HFP) period 864.

The horizontal sync period 816 starts at the beginning of a line. The horizontal back porch period 868 starts at the end of the horizontal sync period 816 and lasts until the first active pixel of the line (i.e., the beginning of horizontal active period 862-thus, for display 120, pixels are output on clock pulses occurring during horizontal active periods 862). The horizontal front porch period 864 starts after the last active pixel of the line, and lasts until the beginning of the next line (i.e. the beginning of the next horizontal sync). Each of these periods may be defined an integer multiple of the pixel time. Note that the HBI is typically observed for all line times, even those that occur during the VBI.

One possible solution for generating the timing for display 160 is to use the input clock (i.e., display 120'S clock) as the output clock during HBI periods, which would also allow display 160 to use the input horizontal sync signal and the HBP and HFP periods associated with display 120. In this solution, during non-HBI periods, certain clocks are suppressed according to the degree of horizontal scaling that is required. Circuitry to accomplish these objectives is shown in Fig. 4. Clock gating logic 430 receives inClk 426 (display 120'S clock) and enable signal 424. When enable signal 424 is asserted (or de-asserted in other embodiments), logic 430 outputs inClk 426 as outClk 436. When enable signal 424 is not asserted, logic 430 does not pass (gates) any clock appearing on inClk 426. In this arrangement, outClk 436 may therefore have a duty cycle of less than 50% during the H active period.

The configuration of Fig. 4 may be used when there is compatibility with other aspects of the design of computing device 110. In some settings, however, it may not be possible to implement the clock gating circuit of Fig. 4. Accordingly, alternative approaches to retiming frames for display 160 may be used.

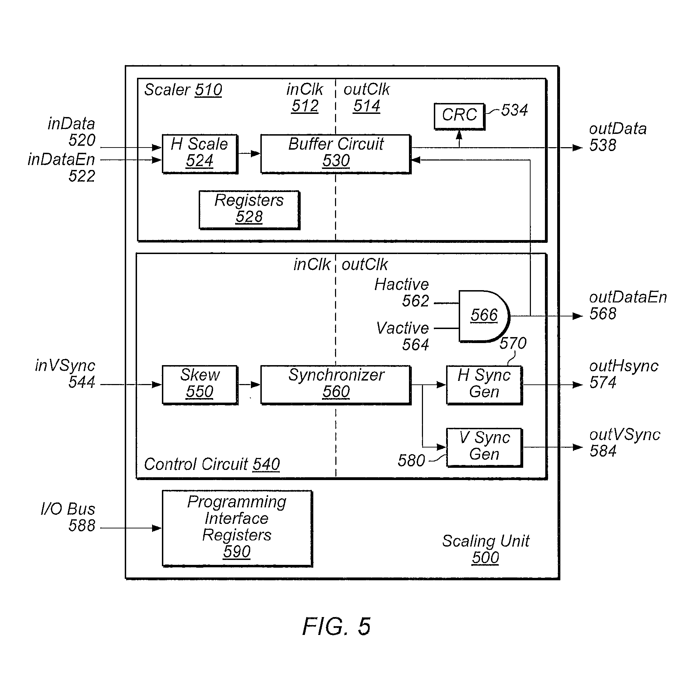

Turning now to Fig. 5, a block diagram of one embodiment of a scaling unit 500 is depicted. Scaling unit 500 includes three primary blocks: scaler 510, control circuit 540, and programming interface 590. These blocks are responsible for two primary tasks: down-scaling and retiming an incoming frame. As will be described further below, scaling unit 500 may be programmed with certain parameters corresponding to external display 160; these parameters may then be used to generate output vertical and horizontal control signals. The generated output control signals may then be used to control when down-scaled pixels are output from scaling unit 500. Thus, after being programmed based on information received over I/O bus 588, scaling unit 500 receives input data 520, input data enable 522, input vertical sync 544 and produces output data 538, output data enable 568, output horizontal sync 574, and output vertical sync 584.

At a high level, the retiming mechanism of scaling unit 500 is based on ensuring that the frame time (e.g., reference numeral 804) of the input frame (i.e., a frame output to display 120) is equal to the frame time of the corresponding output frame (i.e., a frame that is output to display 160). Because scaling unit 500 does not perform any vertical scaling, however, the VBI and the height of the output frame can be unchanged from the input frame. Accordingly, an equation for keeping the input and output frame rates the same reduces to keeping input and output line times equal:

$$(\text{width}_{in} + \text{HBI}_{in})/\text{clk}_{in} = (\text{width}_{out} + \text{HBI}_{out})/\text{clk}_{out}.$$

Note that $\text{width}_{in}$, HBIin, $\text{clk}_{in}$, and $\text{width}_{out}$ for the internal display are known and may be fixed; scaling unit 500 is configured to select $\text{HBI}_{out}$ and $\text{clk}_{out}$ such that this equation and others described below are satisfied. Failing to adhere to this restriction may cause the phase offset to drift over time, resulting in visual artifacts on display 160.

Another high-level design consideration in certain embodiments relates to the size of buffer circuit 530. In one embodiment, scaling unit 500 is configured to guarantee that scaler 510 can provide scaled data at a constant rate using a clock in output clock domain 514. To do so, scaled data may be buffered before the start of active period of every line. The size of buffer circuit 530 may be related to $\text{HBI}_{out}$, so that buffer circuit does not run out of pixels during this time period. In one embodiment, buffer circuit 530 includes a FIFO with 512 entries, and software within computing device 110 will program $\text{HBI}_{out}$ to be less than 512 pixel periods.

In one embodiment, scaler 510 is the primary data path of scaling unit 500, responsible for performing the horizontal scaling on the incoming frame. It may be composed of three sub-blocks in one embodiment: horizontal scaler (H Scale) block 524, buffer circuit 530, and CRC block 534.

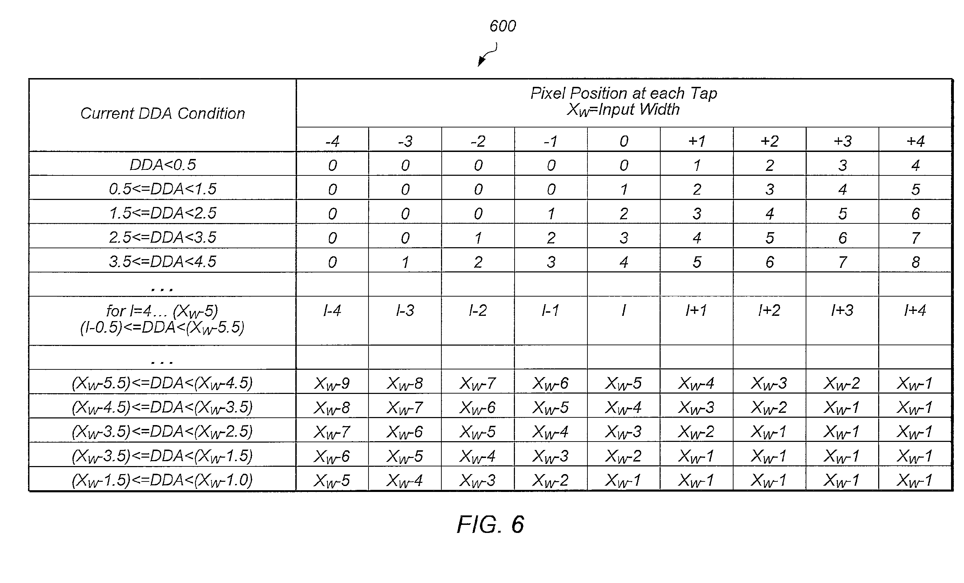

In one embodiment of H Scale unit 524, horizontal scaling is accomplished via three separate 9-tap polyphase filters, one for each pixel component (R, G, B). The filters may use a shared digital differential analyzer (DDA) to control the stepping of the current center pixel and the index for the coefficients. The DDA value may start each line at a value referred to as DDAInit, and may be incremented by a value DDAStep for each subsequent output pixel. (In one implementation, DDAStep is programmed so that the input width divided by the DDAStep equals the output width.) In one embodiment, input pixels enter one end of a 9-entry shift register, making their way to the other end as subsequent pixels are received. When all the input pixels necessary for an output pixel are in the shift register (as determined from the DDA) the scaling calculation is performed, and the output pixel generated. A table describing the scaling process is described further below with reference to Fig. 6.

The DDA (Digital Differential Analyzer) may be used to control the current position during the scaling operation. In one embodiment, it is a 36-bit fixed-point number with 16 bits in the integer portion and 20 bits in the fraction. The 16-bit integer portion determines the current pixel position, while the fraction is used to index into a coefficient table. The horizontal scaler uses 16 phase coefficient tables (one table per tap), so only the upper four fractional bits (rounded) are used for the index. The same index may be used for each table.

Each filter may multiply nine input pixel components (repeated when necessary) by nine coefficients drawn from the tables, and sums the results to form the destination pixel component. The results may be rounded as needed. For edge cases, the pixels that are used for filtering depend upon the relationship between the current DDA and either O (left edge) or the input width (right edge). When the DDA is close enough to the border that there are not enough pixels to perform the 9-tap filtering, then the border pixels are repeated. Fig. 6 is one example of a table that describes the pixels used for border cases.

Buffer circuit 530 receives scaled pixel data from H Scale unit 524. In one embodiment, buffer circuit 530 includes a 512-deep 24-bit asynchronous FIFO that is written in the input clock domain (512) and read in the output clock domain (514). Data is pushed into the FIFO whenever scaled data is available, and is read every output clock cycle during the pixel active period (the overlap of the vertical and horizontal active periods; in the embodiment shown, output data enable 568 in Fig. 5 is asserted).

Scaler 510 may use CRC block 534 to provide a mechanism for determining the correctness of the output frame. In one embodiment, the CRC is updated constantly during frame time (both when active pixels are generated and during blanking), and is optionally reset at the end of each frame. The input stream for the CRC can be thought of as the 3 8-bit outputs of the horizontal scalers organized as {Red[7:0], Blue[7:0], Green[7:0]}, with the low order bit entering the CRC first. During blanking the data input to the CRC may be o in one embodiment.

In the embodiment shown, control circuit 540 is responsible for retiming of the incoming frame. It is composed of three sub-blocks: skew block 550, vertical sync generator 580, and horizontal sync generator 570. As shown, the vertical and horizontal sync generators run in output clock domain 514.

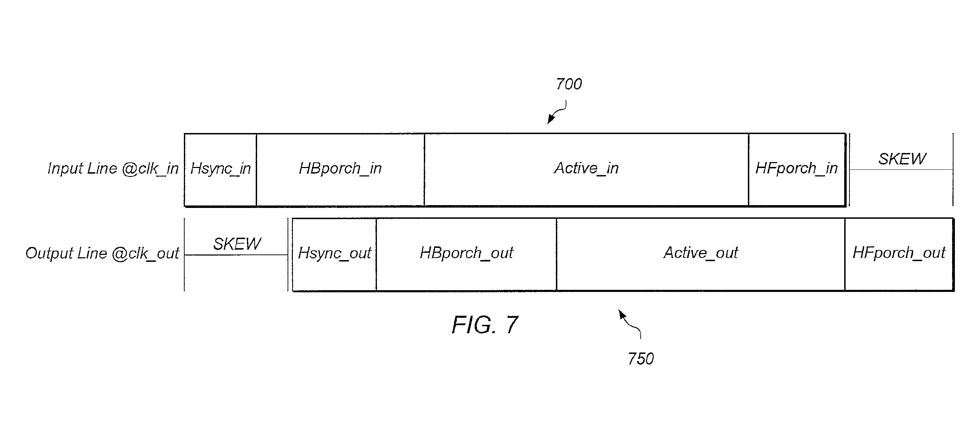

Skew block 550 is responsible for setting the phase offset between the input frame and the output frame. Upon receiving input vertical sync signal 544 (inVSync), skew block 550 starts a count operation. Once the count is completed, a go signal (synchronized to output clock domain 514) is sent to other blocks in control circuit 540. In one embodiment, the programmed count is greater than the latency between receipt of the first input pixel and the generation of the first output pixel, ensuring that output data enable 538 is not driven active before pixels are available in buffer circuit 530. Fig. 7 demonstrates the operation of skew block 550 by depicting the relative timing of a given input line 700 and corresponding output line 750. As shown, there is a SKEW period (set by block 550) at the beginning of output line 750. This time period allows output pixels to be generated by H scale unit 524 and made available via buffer circuit 530. Note that input line 700 ends SKEW before the output line 750 just as input line 700 starts SKEW before output line 750. As shown, the line times of the input and output lines are equal. Accordingly, the frame times of the input and output frames can be kept equal and in sync, although pixels within individual lines in the output frame have a phase offset produced by skew block 550 and are thus slightly out of phase with respect to corresponding input pixels (the output of skew block 550 may be referred to as a "skew" or "phase offset" signal in one embodiment). This may be referred to as an "isochronous" display of images. The phase offset is so slight in one embodiment that it is not visually perceptible by a user. As used herein, this display of slightly-out-of-phase frames at the same refresh rate is referred to as "concurrent," "synchronized," or "synchronous" display.

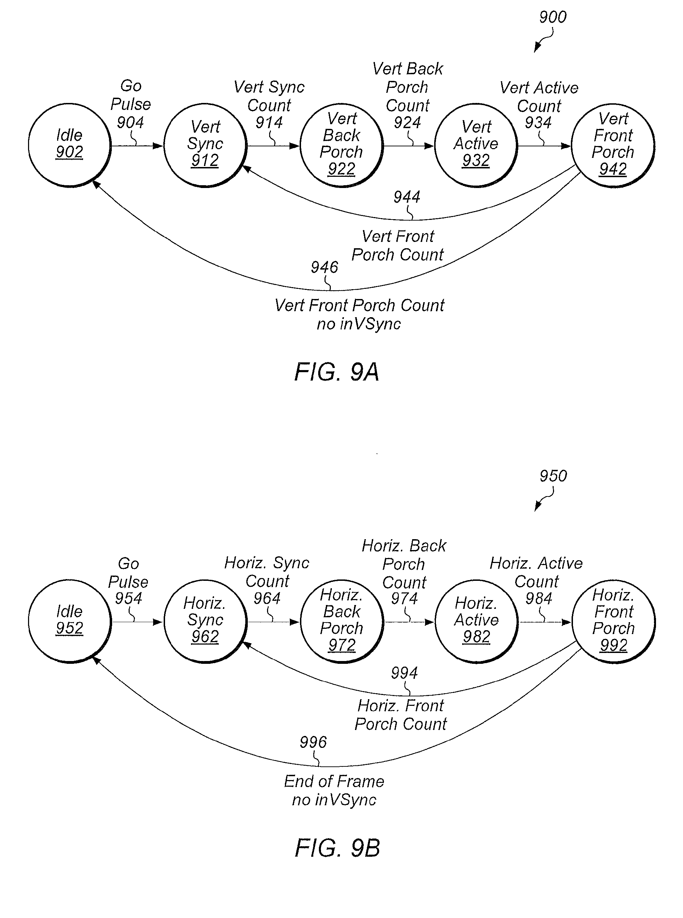

Vertical sync generator 580 in Fig. 5 has two functions: generating output vertical sync 584, and indicating when the output frame is in the vertical active region. In one embodiment, the logic includes a state machine and a counter. Vertical sync generator 580 may cause output vertical sync signal 584 (outVsync) to be asserted when the state machine is in the vertical sync state, and vertical active signal 564 (Vactive) to be generated when the state machine is in the vertical active state. An exemplary state machine is described further below with reference to Fig. 9A.

Like vertical sync generator 580, horizontal sync generator 570 in Fig. 5 has two functions: generating output horizontal sync 574 (outHSync) and a horizontal active signal 562 (Hactive). Generator 570 may also be implemented using a state machine and counter. Horizontal sync generator 570 may cause horizontal sync 574 to be asserted when the state machine is in the horizontal sync state, and the horizontal active signal to be asserted when the state machine is in the horizontal active state. An exemplary state machine is described further below with reference to Fig. 9B.

As shown, output data enable signal 568 (outDataEn) is used to determine when to read output data 538 (outData) from buffer circuit 530. Output data enable 568 may be determined in one embodiment by ANDing horizontal active signal 562 and vertical active signal 564 produced by generators 570 and 580, respectively. Accordingly, when control circuit 540 indicates that the output frame is within a vertical active period (i.e., a non-VBI period) and within a horizontal active period (i.e., a non-HBI period), output data enable 568 is valid, and a pixel is read from buffer circuit 530.

Various units within scaling unit 500 may depend upon programmed values to operate correctly for a given set of displays 120 and 160. Accordingly, in one embodiment, once computing device 110 detects a connection to external display 160, device 110 may determine one or more characteristics of display 160 (e.g., resolution), select a predetermined set of parameters from a data store, and program scaling unit 500 with these selected parameters (e.g., into programming interface 590 via I/O bus 588).

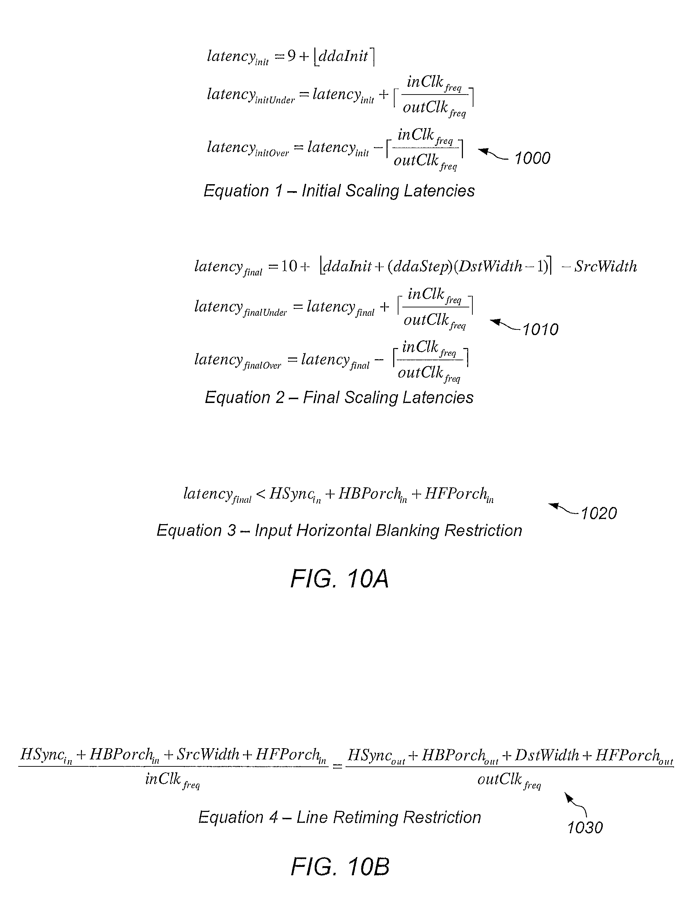

There are numerous possible values that may be programmed via interface 590. A Skew Count Register may be used to set the latency between the start of an input frame and the start of the corresponding output frame in input clock cycles. Such a value may ensure scaled data is available when the horizontal state machine is in the horizontal active state. Equations that may restrict the programming of this register in certain embodiments are described further below with reference to Figs. 10A-D.

A Source Frame Size Register may specify the size (width and height) in pixels of the frame being input to scaling unit 500. Similarly, a Destination Frame Size Register may specify the size (width and height) in pixels of the frame being output from unit 500.

Values for various vertical and horizontal control signals may be programmed via interface 590. A Vertical Sync Count Register may be used for software to specify the input and output vertical sync period in line times. A Vertical Back Porch Count Register may be used to specify the input and output vertical back porch period in line times. Similarly, a Vertical Front Porch Count Register may be used to specify the input and output vertical front porch period in line times. Similar register values may be set for output horizontal sync period, output horizontal back porch period, and horizontal front porch period (all in output clock cycles). Equations restricting programming of these registers in certain embodiments are described further below. These registers may control the timing of the vertical and horizontal state machines described below with reference to Figs. 9A-B.

Interface 590 may also be used to set parameters pertinent to scaler 510. For example, in one embodiment, a DDA Initial Value Register may be used to set an initial value for the DDA, which is used to set the initial scale location on each line. A DDA Step Value Register may contain a step value for the DDA, which is used to control horizontal scaling. Horizontal Scaler Coefficient Registers may contain 16-bit coefficient values used to perform the 9-tap horizontal scaling function. The registers may be organized as 9 tables of 16 entries each, corresponding to the 9 taps and 16 phases of the horizontal scaler.

Thus, upon determining characteristics of external display 160, computing device 110 may program various registers within scaling unit 500 to ensure concurrent display of images on the primary and secondary display. For example, software on device 110 may, given an input clock and input HBI parameters, select an output clock and control signal parameters that permit input and output line times to be equal. These parameters may be selected from a data store (e.g., registers or other storage element) within computing device 110. In one embodiment, these parameters have been computed for some set of possible external displays so that the timing equations described with reference to Figs. 10A-D are satisfied. Computing device 110 may thus include a table with a list of predetermined parameters for various display resolutions. Device 110 may select one set of the parameters based on an external display that has been detected, and then use these predetermined parameters to program scaling unit 500 accordingly. In this manner, an output clock frequency, output HBI, and other parameters may be chosen so that the timing of the input and output frames is equal.

Turning now to Figs. 9A and 9B, embodiments of state machines 900 and 950 used to implement vertical sync generator 580 and horizontal sync generator 570, respectively, are shown. In one embodiment, state machine 900 operates in the output clock domain and includes five states: idle state 902, vertical sync state 912, vertical back porch state 922, vertical active state 932, and vertical front porch state 942. State machine 950 includes similar states for the horizontal dimension. Although not pictured, state machines 900 and 950 also include a counter in one embodiment. The state machine may also be programmed with various count values. For example, state machine 900 may be programmed with count values that indicate the period of the four phases within a frame: vertical sync count 914, vertical back porch count 924, vertical active count 934, and vertical front porch count 944. State machine 950 includes similar count values. These count values dictate the length of the frame and line and the times at which the output control signals are asserted by generators 580 and 570.

As described above, state machine 900 begins in idle state 902; upon skew block 550 generating a go pulse and synchronizer 560 outputting go pulse 904 in output clock domain 514, state machine 900 transitions to vertical sync state 912, which causes output vertical sync 584 to be asserted. The counter in state machine 900 then begins counting to vertical sync count 914. Upon reaching this value, output vertical sync 584 is de-asserted, and state machine transitions to vertical back porch state 922, where it remains until the counter (which has been reset in one embodiment) reaches vertical back porch count 924. At that point, state machine 900 transitions to state 932 and asserts vertical active signal 932 until vertical active count 934 is reached. State machine 900 then transitions to state 942 (vertical front porch period), de-asserts the vertical active signal, and begins counting to vertical front porch value 942. When vertical front porch 942 is reached and another input vertical sync 544 has been received by control circuit 540 for the next input frame, state machine 900 transitions back to state 912 and asserts output vertical sync 584. If another frame has not been received, state machine 900 transitions to idle state 902 and remains until another input vertical sync 544 is received.

State machine 950 operates in an analogous manner to state machine 900, and generates output horizontal sync 962 and output horizontal active 982 in response to input vertical sync 544 and the various count values programmed by computing device 110.

Turning now to Figs. 10A-D, exemplary equations are shown that express restrictions on values for registers that may be programmed via interface 590. Note that certain values in these equations are specific to a particular hardware implementation of scaling unit 500. Thus, for a particular scaling unit design, variations of these equations may be used in storing predetermined parameter values for different display devices.

Before discussing the actual restrictions on register values, it is helpful to introduce two concepts: initial scaling latency and final scaling latency. Note that these values, though similar in concept, are not necessarily identical. Initial scaling latency, in one implementation, is the time in input clock cycles between when the first input pixel of a line is received and when the first output pixel is ready for transmission. Initial scaling latency may thus be used to determine the time range during which the first output pixel can be safely transmitted. It may be a function of the horizontal scale calculation latency (fixed at 9 in one implementation described above) and the rounded integer portion of the DDAInit (variable from 0-4).

When utilizing initial scaling latency to prevent underflow it may be necessary in some instances to include an output clock cycle in the equation to account for the possibility that synchronization into the output clock domain may take some signals one output clock cycle more than other signals. Conversely, when utilizing the initial scaling latency to prevent overflow an output clock cycle should be subtracted. These relationships are shown in Fig. 10A ("Equation 1," denoted by reference numeral 1000).

Final scaling latency may be defined as the time in input clock cycles between when the last input pixel of a line is received and when the last output pixel is ready for transmission. It may be a function of the horizontal scale calculation latency and the rounded integer portion of the DDA value corresponding to the last output pixel of a line. As with the initial scaling latency, it may be necessary to add one output clock cycle when using the final scaling latency for underflow, and subtract one output clock cycle when using it for overflow. These relationships are shown in Fig. 10A ("Equation 2," denoted by reference numeral 10100). SrcWidth and DstWidth refer to the horizontal active periods for the input and output frames, respectively.

In addition to its use in determining the time range during which the last output pixel can be safely transmitted, the final scaling latency may also determine the minimum input horizontal blanking (the sum of HSync, HBPorch, and HFPorch). This restriction may be used when the final output pixel of any line must be generated before the first input pixel of the subsequent line is received. This restriction, however, is based on the implementation of scaling unit 500 and it is not an inherent retiming restriction. Further, this restriction is entirely within the input clock domain, so there is no asynchronous boundary crossing to consider. This restriction is shown in Fig. 10A ("Equation 3," denoted by reference numeral 1020).

In one possible design, there are three types of retiming restrictions that may be considered: line retiming, pixel retiming, and frame offsetting. Line retiming refers to the restriction that is placed on the input and output line times, while pixel retiming refers to the restrictions placed on when scaled pixels can be output. Frame offsetting refers to the restrictions placed on the time delta between the input and output frames.

As described above, retiming is performed to prevent frame drift between displays. Because scaling unit 500 does not perform vertical scaling (i.e. there are an equal number of input and output lines), scaling unit 500 thus ensures in one embodiment that input and output line times be equal. A line time is the sum of the horizontal blanking time and the horizontal active time. Thus, as long as "Equation 4" in Fig. 10B (denoted by reference numeral 1030) is observed, input and output line times will be equal.

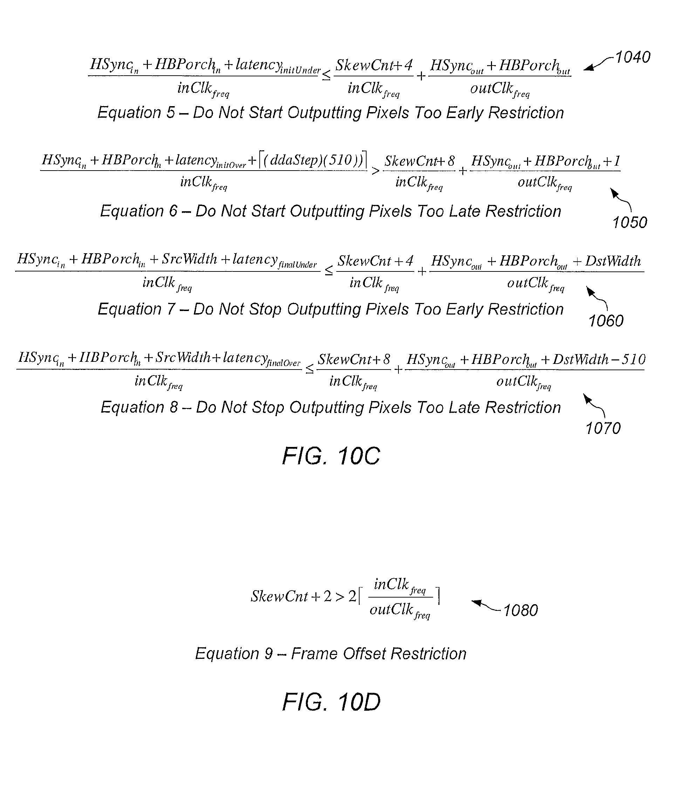

Pixel retiming restrictions are intended to ensure that any given scaled pixel is available at the time it is supposed to be output from buffer circuit 530. In one implementation, there are four such restrictions, corresponding to the following statements: do not start outputting pixels too early, do not start outputting pixels too late, do not stop outputting pixels too early, and do not stop outputting pixels too late. The first restriction (do not start outputting pixels too early; Equation 5 in Fig. 10C, reference numeral 1040) is to ensure that the first output pixel is not transmitted before it is ready. In other words, this equation is directed to not popping pixels out of buffer circuit 530 before a pixel has been into it (preventing an underflow condition). The second restriction (do not start outputting pixels too late; Equation 6 in Fig. 10C, reference numeral 1050) is to ensure that the first output pixel is transmitted before the 512-entry FIFO overflows. (This equation is thus specific to a particular FIFO size within buffer circuit 530.) This equation is thus directed to preventing a situation in which scaling unit 500 waits to pop the first pixel for a line until more than the maximum number of FIFO entries have been pushed (overflow). The third restriction (do not stop outputting pixels too early; Equation 7 in Fig. 10C, reference numeral 1060) is to ensure that the last output pixel is not transmitted before it is ready. Accordingly, this condition is directed to preventing the situation in which scaling unit 500 starts popping pixels out of the FIFO so early that it pops the last pixel before it has been pushed into the FIFO (underflow). The fourth restriction (do not stop outputting pixels too late; Equation 8 in Fig. 10C, reference numeral 1070) is to ensure that the last output pixel is transmitted before the 512-entry FIFO overflows. Thus, for each line, scaling unit 500 should not wait so long to start popping pixels out of the FIFO so that it would have more than 512 pixels in the FIFO at the time the last pixel is pushed into the FIFO (overflow).

Frame offsetting refers to the time skew between the start of the input frame and the output frame. Because, in one embodiment, scaling unit 500 will shut down if it ceases receiving input frames, it may be necessary that the skew be large enough to ensure a "next frame coming" indication is received in the output clock domain before the next frame is scheduled to start. Equation 9, indicated by reference numeral 1080 in Fig. 10D ensures that the input VSync assertion (signifying the start of the next frame) can be seen in the output clock domain before the previous frame has ended. This relationship is guaranteed in one embodiment by making sure that the skew value is great enough that it the synchronized "skew reached" signal and the synchronized VSync signal to assert in the output clock domain at the same time. In certain implementations, skew may be further limited by pixel retiming restrictions described above.

The equations described above can be used to determine a set of parameter values for a particular scaling unit design and a particular external display. For example, these equations may be used to determine timing parameters and output clock frequencies to be used for scaling unit 500 and a 1920x1080 display, scaling unit 500 and a 1024x768 display, and so on. Note that any values that satisfy these equations are possible. Parameters may thus be determined for some set of displays supported by computing device 110. These parameters may then be stored in device 110 in a storage element (and may be updated as needed in certain embodiments). When mirror mode is used and a particular external display 160 is detected, the appropriate set of parameters may be selected and scaling unit 500 programmed via interface 590 to prevent frame drift between input and output frames.

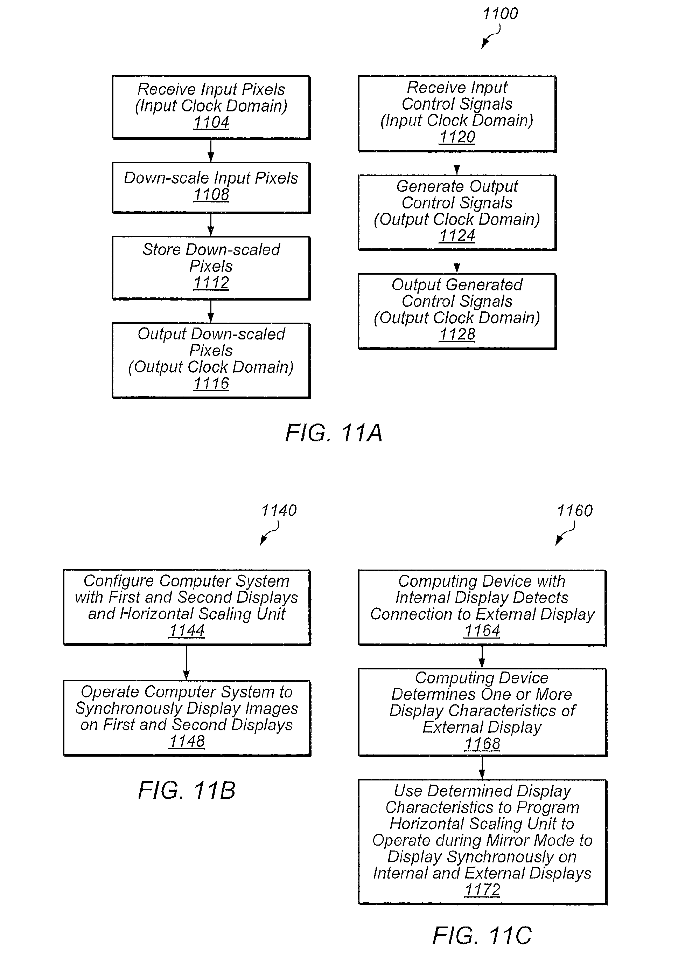

Turning now to Fig. 11A, a flow diagram of a method 1100 is shown, depicting operation of one embodiment of a scaling unit. Method 1100 includes two sets of operations, the first involving pixel down-scaling (steps 1104, 1108, 1112, and 1116), and the second involving outputting of control signals for the output frame (steps 1120, 1124, and 1128). These two sets of operations may correspond to different data paths within an embodiment of a scaling unit, and thus may be performed concurrently at least in part, although certain timing signals (notably vertical and horizontal active periods) may be used in outputting the down-scaled pixels.

The pixel processing data path begins in step 1104, in which pixels from an input frame are received in an input clock domain (e.g., by H scale unit 524). In step 1108, the pixels are down-scaled, such as by unit 524 as described above. In step 1112, the down-scaled pixels are stored, such as in a FIFO in buffer circuit 530. Then, in step 1116, the stored pixels are output for display in an output clock domain, such as from buffer circuit 530. In one embodiment, a pixel is output when both the output horizontal and vertical active signals are asserted (e.g., during step 1128).

The control signal data path begins in step 1120, in which one or more control signals in the input clock domain are received, such as by control circuit 540. In scaling unit 500, input vertical sync 544 is used to denote the start of an input frame; input horizontal sync may not be used by the state machines in this embodiment. In step 1124, output control signals such as output horizontal sync 574, output vertical sync 584, horizontal active 562, and vertical active 564 are generated, and output in step 1128. As noted above, certain of these signals may be used in one embodiment to control the outputting of pixels in step 1116.

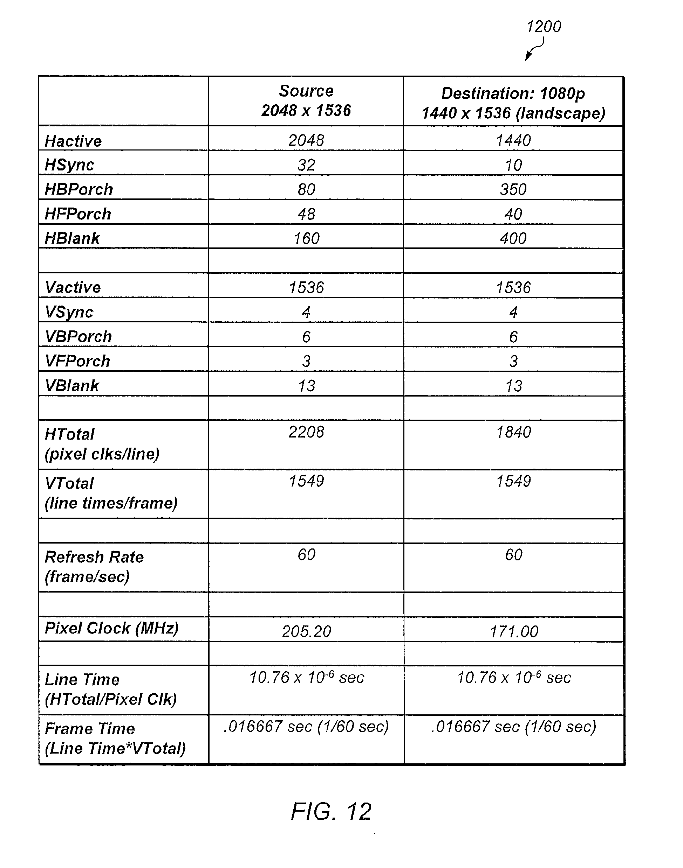

An example application of method 1100 can be illustrated with reference to table 1200 in Fig. 12, which lists sample input and output timing parameters for an IPAD source (2048 x 536 internal display) and an HDTV destination (1920 x 1080, scaled to 1440 x 1536) used in mirror mode to concurrently display images:

In this example timing, the input device has a line time of 2208 pixels, measured with reference to the input pixel clock of 205.2 MHz. This input line time is composed of an HBI of 160 pixel times (32 HSync; 80 HBPorch; 48 HFPorch) and a horizontal active time of 2048 pixel times. The input line time is thus $10.76 \times 10^{-6}$ sec ($2208/205.2 \times 10^6$). The input frame time is 1549 line times, which, as indicated above, are measured in the input clock domain. The vertical active period is 1536 lines, and a VBI of 13 line times (4 VSync; 6 VBPorch; 3 VFPorch). The frame time is thus $10\text{-}76 \times 10^{-6} * 1549$, or .016667 sec (1/60 sec, for a refresh rate of 60).

On the output device, there are 1440 pixels per line in the example shown, as opposed to 2048 pixels per line on the input device. In the example shown, the output device is supplied with a slower pixel clock (171 MHz). Additionally, the HBI is set to 400 pixel times (10 HSync; 250HBPorch; 40 HFPorch), for a total of 1840 pixel times/line. With these settings and the output pixel clock, the output line time is $10\text{-}76 \times 10^{-6}$ sec ($1840/171 \times 10^6$)-the same line time for lines in the input frame.

As described above, in one embodiment, computing device 110 performs only horizontal scaling on the device (vertical scaling is performed external to device 110). Thus, the number of lines/frame in the output frame is kept identical to the number of lines/frame in the output frame: 1549 (with the same breakdown between vertical active lines and the VBI). Keeping the same number of lines/frame and the same absolute line time in both the input and output frames thus eliminates drift between images on the two displays. Note that the parameters in the table above are exemplary and other values may be used. In particular, there are other possible values which keep line times the same in both the input and output clock domains. Additionally, other sets of parameters may be used for different destinations for the same source shown above (2048 x 1536). Still further, other sets of parameters may be use for different source/destination combinations.

Turning now to Fig. 11B, a flow diagram of a method 1140 is shown, depicting operation of one embodiment of system 100. Method 1140 is directed to making a presentation with device 110 in mirror mode using first and second displays and a horizontal scaling unit. In step 1144, system 100 is set up (configured) such that computing device 110 having an internal (or primary) display and a horizontal scaling unit is connected to an external (or secondary) display. In step 1148, system 100 is then operated to give the presentation (e.g., software running on device 110), displaying output images on display 120 and concurrently on display 160 using device 110's mirror mode. During operation, the orientation of device 110 may be changed, causing a change in the scaling factor applied by unit 220 to produce images on display 160.

Turning now to Fig. 11C, a flow diagram of a method 1160 is shown, depicting operation of one embodiment of computing device 110. In step 1164, a computing device having an internal display detects a connection to an external display (e.g., via interface 130). In step 1168, device 110 determines (e.g., through a handshaking protocol) one or more display characteristics of external display 160. For example, step 1168 may determine a resolution of display 160 in one embodiment. In step 1172, device 110 uses the determined characteristics to select one or more timing parameters (output clock frequency, output HBI, etc.), such as from a data store within device 110 that has been preprogrammed with values that satisfy equations such as those shown in Figs. 10A-D. The selected parameters are then used to programming a scaling unit such as unit 500 so that input and output line times are set to be equal, preventing drift between frames on displays 120 and 160.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Accordingly, new claims may be formulated during prosecution of this application (or an application claiming priority thereto) to any such combination of features. In particular, with reference to the appended claims, features from dependent claims may be combined with those of the independent claims and features from respective independent claims may be combined in any appropriate manner and not merely in the specific combinations enumerated in the appended claims.

**Claims**

1. A system, comprising:

    a computing device including:

        a display generation unit configured to generate image data, wherein the generated image data is usable to display an image having a horizontal dimension and a vertical dimension, wherein the horizontal dimension has a first number of pixels;
        a horizontal scaling unit configured to produce, from the generated image data, image data scaled in the horizontal dimension but not the vertical dimension, wherein the horizontal dimension in the scaled image data has less than the first number of pixels; and
        an external interface, wherein the horizontal scaling unit is configured to provide the scaled image data to an external interface.

2. The system of claim 1, wherein the computing device is configured to display the image on an internal display of the computing device, and wherein the external interface permits display of a scaled version of the image on an external display coupled to the external interface.

3. The system of claim 2, wherein the system is configured to display the image on the internal display of the computing device synchronously with displaying the scaled version of the image on the external display.

4. The system of claim 2, wherein the computing device is configured to display the image on the internal display with an aspect ratio, and wherein the horizontal scaling unit is configured to reduce the first number of pixels in the horizontal dimension in order to maintain the aspect ratio of the image in displaying the scaled version of the image on the external display.

5. The system of claim 2, wherein the internal display has an internal display resolution, and wherein a data width of the external interface is insufficient to permit displaying the scaled version of the image on the external display at the internal display resolution synchronously with displaying the image on the internal display.

6. The system of claim 1, wherein the horizontal scaling unit is configured to vary the scaled image data according to a current orientation of the computing device.

7. The system of claim 2, wherein the horizontal scaling unit is configured to generate the scaled image data using a scaling factor based on a dimension of the external display.

8. The system of claim 2, further comprising:

a vertical scaling unit coupled to receive the horizontally scaled image data via the external interface and generate vertically scaled image data that has a reduced number of lines relative to a number of lines in the image displayed on the internal display of the computing device.

9. A method, comprising:

a scaling unit in a computing device receiving a line of pixels within an image to be displayed on a display of the computing device;
the scaling unit reducing a number of pixels in the line of pixels to produce a scaled line of pixels; and
the scaling unit providing the scaled line of pixels to an interface of the computing device for external vertical scaling and display of a scaled version of the image on an external display coupled to the computing device.

10. The method of claim 9, wherein pixels in the line of pixels are represented in a red-green-blue (RGB) color space, and wherein the reducing is performed according to a scale factor that maintains an aspect ratio of the image as displayed on the display of the computing device in displaying the scaled version of the image on the external display.

11. The method of claim 10, wherein the aspect ratio of the image displayed on the display of the computing device is based on a current orientation of the computing device.

12. The method of claim 9, wherein the reducing is performed according to a scale factor based on a dimension of the external display.

13. The method of claim 9, wherein the reducing is performed according to a current aspect ratio of the display of the computing device.

14. The method of claim 9, further comprising:

displaying the image on the display of the computing device synchronously with displaying the scaled version of the image on the external display coupled to the computing device.

15. The method of claim 14, wherein the display of the computing device is an internal display.

FIG. 1

FIG. 2

310

2048
Columns

1920
Columns

1536
Rows

Internal
Display
120

4:3 Aspect Ratio

1080
Rows

HDTV
160

1440 Columns =
1080 x 4/3

FIG. 3A

1536
Columns

310

1920
Columns

2048
Rows

Internal
Display
120

3:4 Aspect Ratio

1080
Rows

HDTV
160

810 Columns =
1080 x 3/4

FIG. 3B

FIG. 4

FIG. 5

600

| Current DDA Condition | Pixel Position at each Tap $X_W$=Input Width | | | | | | | | |
|---|---|---|---|---|---|---|---|---|---|
| | -4 | -3 | -2 | -1 | 0 | +1 | +2 | +3 | +4 |
| DDA<0.5 | 0 | 0 | 0 | 0 | 0 | 1 | 2 | 3 | 4 |
| 0.5<=DDA<1.5 | 0 | 0 | 0 | 0 | 1 | 2 | 3 | 4 | 5 |
| 1.5<=DDA<2.5 | 0 | 0 | 0 | 1 | 2 | 3 | 4 | 5 | 6 |
| 2.5<=DDA<3.5 | 0 | 0 | 1 | 2 | 3 | 4 | 5 | 6 | 7 |
| 3.5<=DDA<4.5 | 0 | 1 | 2 | 3 | 4 | 5 | 6 | 7 | 8 |
| ... | | | | | | | | | |
| for I=4... ($X_W$-5) (I-0.5)<=DDA<($X_W$-5.5) | I-4 | I-3 | I-2 | I-1 | I | I+1 | I+2 | I+3 | I+4 |
| ... | | | | | | | | | |
| ($X_W$-5.5)<=DDA<($X_W$-4.5) | $X_W$-9 | $X_W$-8 | $X_W$-7 | $X_W$-6 | $X_W$-5 | $X_W$-4 | $X_W$-3 | $X_W$-2 | $X_W$-1 |
| ($X_W$-4.5)<=DDA<($X_W$-3.5) | $X_W$-8 | $X_W$-7 | $X_W$-6 | $X_W$-5 | $X_W$-4 | $X_W$-3 | $X_W$-2 | $X_W$-1 | $X_W$-1 |
| ($X_W$-3.5)<=DDA<($X_W$-2.5) | $X_W$-7 | $X_W$-6 | $X_W$-5 | $X_W$-4 | $X_W$-3 | $X_W$-2 | $X_W$-1 | $X_W$-1 | $X_W$-1 |
| ($X_W$-3.5)<=DDA<($X_W$-1.5) | $X_W$-6 | $X_W$-5 | $X_W$-4 | $X_W$-3 | $X_W$-2 | $X_W$-1 | $X_W$-1 | $X_W$-1 | $X_W$-1 |
| ($X_W$-1.5)<=DDA<($X_W$-1.0) | $X_W$-5 | $X_W$-4 | $X_W$-3 | $X_W$-2 | $X_W$-1 | $X_W$-1 | $X_W$-1 | $X_W$-1 | $X_W$-1 |

FIG. 6

EP 2 533 194 A1

| Input Line @clk_in | Hsync_in | HBporch_in | Active_in | HFporch_in | SKEW |
|---|---|---|---|---|---|

700

| Output Line @clk_out | SKEW | Hsync_out | HBporch_out | Active_out | HFporch_out |
|---|---|---|---|---|---|

**FIG. 7**

750

800

Vertical
Blanking Interval
(VBI)
808

Frame
804

812
Vertical
Active

814
Vertical
Front
Porch

816
VSync

818
Vertical
Back
Porch

814

**FIG. 8A**

850

Horizontal
Blanking Interval
(HBI)
858

Line
854

862
Horizontal
Active

864
Horizontal
Front
Porch

816
HSync

868
Horizontal
Back
Porch

864

**FIG. 8B**

**FIG. 9A**

**FIG. 9B**

$$latency_{Init} = 9 + \lfloor ddaInit \rceil$$

$$latency_{InitUnder} = latency_{Init} + \left\lceil \frac{inClk_{freq}}{outClk_{freq}} \right\rceil$$

$$latency_{InitOver} = latency_{Init} - \left\lceil \frac{inClk_{freq}}{outClk_{freq}} \right\rceil \quad \longleftarrow 1000$$

Equation 1 – Initial Scaling Latencies

$$latency_{final} = 10 + \lfloor ddaInit + (ddaStep)(DstWidth - 1) \rceil - SrcWidth$$

$$latency_{finalUnder} = latency_{final} + \left\lceil \frac{inClk_{freq}}{outClk_{freq}} \right\rceil \quad \longleftarrow 1010$$

$$latency_{finalOver} = latency_{final} - \left\lceil \frac{inClk_{freq}}{outClk_{freq}} \right\rceil$$

Equation 2 – Final Scaling Latencies

$$latency_{final} < HSync_{in} + HBPorch_{in} + HFPorch_{in} \quad \longleftarrow 1020$$

Equation 3 – Input Horizontal Blanking Restriction

## FIG. 10A

$$\frac{HSync_{in} + HBPorch_{in} + SrcWidth + HFPorch_{in}}{inClk_{freq}} = \frac{HSync_{out} + HBPorch_{out} + DstWidth + HFPorch_{out}}{outClk_{freq}}$$

Equation 4 – Line Retiming Restriction $\quad \longleftarrow 1030$

## FIG. 10B

$$\frac{HSync_{in} + HBPorch_{in} + latency_{initUnder}}{inClk_{freq}} \leq \frac{SkewCnt + 4}{inClk_{freq}} + \frac{HSync_{out} + HBPorch_{out}}{outClk_{freq}}$$

Equation 5 – Do Not Start Outputting Pixels Too Early Restriction

$$\frac{HSync_{in} + HBPorch_{in} + latency_{initOver} + \lceil (ddaStep)(510) \rceil}{inClk_{freq}} > \frac{SkewCnt + 8}{inClk_{freq}} + \frac{HSync_{out} + HBPorch_{out} + 1}{outClk_{freq}}$$

Equation 6 – Do Not Start Outputting Pixels Too Late Restriction

$$\frac{HSync_{in} + HBPorch_{in} + SrcWidth + latency_{finalUnder}}{inClk_{freq}} \leq \frac{SkewCnt + 4}{inClk_{freq}} + \frac{HSync_{out} + HBPorch_{out} + DstWidth}{outClk_{freq}}$$

Equation 7 – Do Not Stop Outputting Pixels Too Early Restriction

$$\frac{HSync_{in} + HBPorch_{in} + SrcWidth + latency_{finalOver}}{inClk_{freq}} \leq \frac{SkewCnt + 8}{inClk_{freq}} + \frac{HSync_{out} + HBPorch_{out} + DstWidth - 510}{outClk_{freq}}$$

Equation 8 – Do Not Stop Outputting Pixels Too Late Restriction

FIG. 10C

$$SkewCnt + 2 > 2 \left\lceil \frac{inClk_{freq}}{outClk_{freq}} \right\rceil$$

Equation 9 – Frame Offset Restriction

FIG. 10D

1100

Receive Input Pixels
(Input Clock Domain)
1104

↓

Down-scale Input Pixels
1108

↓

Store Down-scaled
Pixels
1112

↓

Output Down-scaled
Pixels
(Output Clock Domain)
1116

Receive Input
Control Signals
(Input Clock Domain)
1120

↓

Generate Output
Control Signals
(Output Clock Domain)
1124

↓

Output Generated
Control Signals
(Output Clock Domain)
1128

FIG. 11A

1140

Configure Computer System
with First and Second Displays
and Horizontal Scaling Unit
1144

↓

Operate Computer System to
Synchronously Display Images
on First and Second Displays
1148

FIG. 11B

1160

Computing Device with
Internal Display Detects
Connection to External Display
1164

↓

Computing Device
Determines One or More
Display Characteristics of
External Display
1168

↓

Use Determined Display
Characteristics to Program
Horizontal Scaling Unit to
Operate during Mirror Mode to
Display Synchronously on
Internal and External Displays
1172

FIG. 11C

*1200*

| | Source 2048 x 1536 | Destination: 1080p 1440 x 1536 (landscape) |
|---|---|---|
| Hactive | 2048 | 1440 |
| HSync | 32 | 10 |
| HBPorch | 80 | 350 |
| HFPorch | 48 | 40 |
| HBlank | 160 | 400 |
| | | |
| Vactive | 1536 | 1536 |
| VSync | 4 | 4 |
| VBPorch | 6 | 6 |
| VFPorch | 3 | 3 |
| VBlank | 13 | 13 |
| | | |
| HTotal (pixel clks/line) | 2208 | 1840 |
| VTotal (line times/frame) | 1549 | 1549 |
| | | |
| Refresh Rate (frame/sec) | 60 | 60 |
| | | |
| Pixel Clock (MHz) | 205.20 | 171.00 |
| | | |
| Line Time (HTotal/Pixel Clk) | $10.76 \times 10^{-6}$ sec | $10.76 \times 10^{-6}$ sec |
| Frame Time (Line Time*VTotal) | .016667 sec (1/60 sec) | .016667 sec (1/60 sec) |

*FIG. 12*

Europäisches
Patentamt

European
Patent Office

Office européen
des brevets

# EUROPEAN SEARCH REPORT

Application Number

EP 12 17 0810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/126683 A2 (HARRIS CORP [US]) 15 October 2009 (2009-10-15) * page 3, line 17 - line 21 * * page 6, line 16 - line 22; claims 1-2 * | 1-15 | INV. G06T3/40 |
| X | WO 2009/126686 A1 (HARRIS CORP [US]) 15 October 2009 (2009-10-15) * page 6, line 17 - line 23; claims 1, 3-4 * | 1-15 | |
| A | EP 1 237 122 A2 (FUJI PHOTO FILM CO LTD [JP]) 4 September 2002 (2002-09-04) * paragraphs [0049] - [0050]; figure 1 * | 1-15 | |
| A | WO 90/16035 A2 (EASTMAN KODAK CO [US]) 27 December 1990 (1990-12-27) * page 3, line 16 - line 26 * * page 17, line 5 - line 21 * | 1-15 | |
| A | US 6 014 125 A (HERBERT BRIAN K [US]) 11 January 2000 (2000-01-11) * column 3, line 8 - line 34 * | 1-15 | TECHNICAL FIELDS SEARCHED (IPC) |
| A | US 2007/025644 A1 (WANG GHY-BIN [TW] ET AL) 1 February 2007 (2007-02-01) * paragraph [0029] * | 1-15 | G06T |
| A | MING-SUI LEE ET AL: "Techniques for flexible image/video resolution conversion with heterogeneous terminals", IEEE COMMUNICATIONS MAGAZINE, IEEE SERVICE CENTER, PISCATAWAY, US, vol. 44, no. 1, 1 January 2007 (2007-01-01), pages 61-67, XP011156149, * page 63, right-hand column, paragraph 2 * | 1-15 | |

The present search report has been drawn up for all claims

| Place of search | Date of completion of the search | Examiner |
|---|---|---|
| Munich | 8 October 2012 | Pierfederici, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 17 0810

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2012

| Patent document cited in search report | | Publication date | Patent family member(s) | | Publication date |
|---|---|---|---|---|---|
| WO 2009126683 | A2 | 15-10-2009 | AT 549699 T | | 15-03-2012 |
| | | | CA 2661771 A1 | | 09-10-2009 |
| | | | EP 2274739 A2 | | 19-01-2011 |
| | | | US 2009256863 A1 | | 15-10-2009 |
| | | | WO 2009126683 A2 | | 15-10-2009 |
| WO 2009126686 | A1 | 15-10-2009 | AT 530016 T | | 15-11-2011 |
| | | | CA 2661768 A1 | | 09-10-2009 |
| | | | EP 2279615 A1 | | 02-02-2011 |
| | | | US 2009256862 A1 | | 15-10-2009 |
| | | | WO 2009126686 A1 | | 15-10-2009 |
| EP 1237122 | A2 | 04-09-2002 | EP 1237122 A2 | | 04-09-2002 |
| | | | JP 4112187 B2 | | 02-07-2008 |
| | | | JP 2002262058 A | | 13-09-2002 |
| | | | US 2002122198 A1 | | 05-09-2002 |
| WO 9016035 | A2 | 27-12-1990 | DE 69028075 D1 | | 19-09-1996 |
| | | | DE 69028075 T2 | | 13-03-1997 |
| | | | EP 0429634 A1 | | 05-06-1991 |
| | | | JP H04500419 A | | 23-01-1992 |
| | | | US 5125042 A | | 23-06-1992 |
| | | | WO 9016035 A2 | | 27-12-1990 |
| US 6014125 | A | 11-01-2000 | NONE | | |
| US 2007025644 | A1 | 01-02-2007 | CN 1812552 A | | 02-08-2006 |
| | | | TW I300310 B | | 21-08-2008 |
| | | | US 2007025644 A1 | | 01-02-2007 |

EPO FORM P0459

For more details about this annex : see Official Journal of the European Patent Office, No. 12/82